# EUROPEAN PATENT APPLICATION

(11) **EP 2 472 960 A1**
(43) Date of publication of application: **04.07.2012**
(21) Application number: 10306539.7
(22) Date of filing: 30.12.2010
(51) Int. Cl.: H04W 48/18, H04W 68/00, H04W 88/06

(54) **Resources control in a multi sim terminal**

(71) Applicant: ST-Ericsson SA, 1228 Plan-les-Ouates (CH)
(72) Inventor: Josso, Nicolas, 72240, La Chapelle Saint Fray (FR); Pretesille, Erwan, 72230, ARNAGE (FR); Roullier, Sylviane, 72000, LE MANS (FR)
(74) Representative: Cabinet Plasseraud

(57) **Abstract**

There is described the controlling of a multiple subscriber identity arrangement comprising a modem (10), and a control unit (13) associated with the modem. The modem is capable of receiving messages related to at least two subscriber identities, but not simultaneously, and comprises a listening block (11) capable of monitoring at least one signalling channel associated with the second subscriber identity. The control unit (13) is configured to interrupt ongoing communication activity on the first subscriber identity during at least one signalling occasion (41,42,51,52) associated with the second subscriber identity and cause the listening block of the modem to monitor the signalling channel associated to the second subscriber identity during said occasion.

## Description

### Technical Field

The present invention generally relates to devices and methods for the management of (e.g) radio resources in a multiple Subscriber Identity (e.g. Multi SIM) terminal capable of receiving messages relating to two or more subscriber identities, but not simultaneously.

### BACKGROUND

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Mobile devices adapted for Multi SIM application are now becoming available to end users. A benefit of such mobile devices for the user is that the user should be able to receive calls on several subscriptions using a single device.

For example, a Dual SIM Dual Standby (DSDS) terminal comprises means for receiving/sending messages associated with at least two subscriber identities. The at least two subscriber identities may be associated with the same or different cellular networks, and may be using the same or different Radio Access Technologies (RAT).

However, typical DSDS mobile devices have only one radiofrequency (RF) module and only one baseband (BB) module, that can be shared by the two Subscriber Identities (SI) in Idle Discontinuous Reception (Idle-DRX) mode, but that are able to manage only one SI at each moment in time in idle no-DRX modes and in dedicated modes. Therefore, as soon as one SI is active in a dedicated mode (for voice call or for packet transfer, for example), the other SI becomes out of range with respect to the network, typically leading to missed calls on said other SI. After the call on the first SI releases, the User Equipment (UE) may spend some time recovering network access for the second SI. These limitations typically involve low performance of such devices in terms of Mobile Terminated (MT) call setup from the user point of view, i.e., in terms of incoming call reception rate.

Embodiments of the present invention will improve the situation.

### SUMMARY

A first aspect of the invention is an arrangement comprising a modem and a control unit associated with said modem,
wherein the modem is capable of sending and receiving messages related to at least a first subscriber identity and a second subscriber identity, but not simultaneously, and comprises a listening block capable of monitoring at least one signalling channel associated with the second subscriber identity; and,
wherein the control unit is configured to interrupt ongoing communication activity on the first subscriber identity during at least one signaling occasion associated with the second subscriber identity and cause the listening block of the modem to monitor the signaling channel associated to the second subscriber identity during said occasion.

Thus, there are created gaps in the communication (e.g. continuous or non continuous reception, transmission) activity on the first subscriber identity, which are used to monitor e.g. the paging channel associated with the second subscriber identity. If a PCH block received during such a gap contains a request for MT call setup on UE side, the modem may be controlled to stop the reception/transmission activities associated with the first subscriber identity and to answer the paging request by setting up a call according to parameters of the second subscriber identity. On the contrary, if no request for MT call setup is received on the paging channel associated with the second subscriber identity during the time window wherein it is monitored, then the modem may be controlled to resume the communication activity associated with the first subscriber identity. In other words, PCH occasions (e.g. on the second subscriber identity) are given priority over the non-paging reception/transmission activity (e.g. on the first subscriber identity).

In some embodiments, the communication activity on the first subscriber identity comprises continuous reception activity associated with said first subscriber identity.

For instance, the continuous reception activity associated with the first subscriber identity comprises at least one of:
- continuously monitoring the Packet Data Traffic Channel, PDTCH, allocated for data transfer in second Generation, 2G, mobile radio communication systems;
- continuously monitoring the Forward Access Channel, FACH, or the Dedicated Channel, DCH, of third Generation, 3G, mobile radio communication systems; and,
- continuously monitoring the High Speed Shared Control Channel, HS-SCCH, of the High-Speed Downlink Packet Access, HSDPA, of the 3GPP Wideband-Code Division Multiple Access, W-CDMA, communication system.

The communication activity associated with the first subscriber identity may include background activity related to at least one signalling procedure. For instance, the signalling procedure may include at least one of Location Area Update (LAU) and Routing Area Update (RAU).

The communication activity associated with the first subscriber identity may also include background activity generated by at least one application running in at least one dedicated mode of operation associated with the first subscriber identity. For instance, the running application may include at least one of email retrieval, synchronization of email box, calendar and/or contacts, checking for news flash information, updating of reoccurring data such as weather forecast and/or financial data, and software and/or security updates.

In some embodiments, the signalling channel associated with the second subscriber identity is a paging channel associated with the second subscriber identity, and the control unit is configured to cause the modem to interrupt the communication activity associated with the first subscriber identity during paging occasions associated with the second subscriber identity and cause the listening block to monitor the paging channel associated with the second subscriber identity during said paging occasions associated with the second subscriber identity.

In some embodiments, the control unit may be further configured to, when the paging message received on the paging channel associated with the second subscriber identity contains a call setup request, cause the modem to interrupt the ongoing communication activities associated with the first subscriber identity and switch to the second subscriber identity to answer the call setup request.

In a variant, the control unit may be configured to, when the paging message received on the paging channel associated with the second subscriber identity contains a call setup request:
a/ prompt the user and selectively cause the modem to interrupt the ongoing communication activities associated with the first subscriber identity and switch to the second subscriber identity to answer or not the call setup request responsive to an action by the user; or,
b/ have an automated selection algorithm selectively cause the modem to interrupt the ongoing communication activities associated with the first subscriber identity and switch to the second subscriber identity to answer or not the call setup request; or
c/ perform steps a/ for at least one some class of communication activities associated to the first subscriber identity and perform step b/ for at least another class of communication activities associated to the first subscriber identity.

In further embodiments, the control unit may be further configured to, when the call setup request is not answered, cause the modem to temporarily switch to the second subscriber identity and send a deny message to the network associated to the second subscriber identity.

Also, the control unit may be further configured to resume the communication activities associated to the first subscriber identities after the call associated with the second subscriber identity which has been answered is over.

In some other embodiments, the signalling channel associated with the second subscriber identity is a dedicated measurement control channel, and the control unit is configured to cause the modem to interrupt the communication activity associated with the first subscriber identity during occasions of said dedicated measurement control channel associated with the second subscriber identity and cause the listening block to monitor said dedicated measurement control channel associated with the second subscriber identity during said occasions of said dedicated measurement control channel associated with the second subscriber identity.

In some embodiments, the measurements on the 'inactive' second subscriber identity comprise only IDLE type measurements without any reporting to the network (i.e. autonomous measurements by the mobile). Such measurements may include neighbor cell activity measurements (e.g. RSSI, cell sync activity, etc. in both second generation (2G) and third generation (3G) scenarios).

The multiple subscriber identity arrangement may further comprises a paging schedule memory configured to have knowledge of a scheduling of paging occasions for each of the subscriber identities associated with the modem.

Embodiments of the invention are not limited to 3G radio communication systems, but are also applicable to 2G radio communication systems and to any other suitable existing or future communication standards. Examples in both types of systems shall be given in the detailed description below.

The multiple subscriber identity arrangement may further comprising an error recovery unit configured to handle missed data blocks which should have been received or transmitted during interruption of the communication activity associated with the first subscriber identity.

The error recovery unit may be configured to, in a transmission or in a reception mode of operation of the modem on the first subscriber identity, respectively transmit or request retransmission of the missed data blocks when the communication activity associated with the first subscriber identity resumes.

For instance, depending on the duration of the created gap, the multiple error recovery unit may be configured to implement at least one of:
- an OSI Layer 1 Automatic Retransmission Request, ARQ, scheme, such as Hybrid Automatic Repeat reQuest, HARQ;
- an OSI Layer 2 retransmission mechanism such as Radio Link Control, RLC, protocol in acknowledged mode; and,
- an ARQ mechanism used in TCP/IP networking..

The error recovery unit may be configured to, in a reception mode of operation of the modem on the first subscriber identity, obtain the missed data blocks based on an error correction scheme.

A second aspect of the present invention relates to a communication device (e.g. a mobile device) comprising a multiple subscriber identity arrangement as defined above, and a reception/transmission block coupled to modem of the multiple subscriber identity arrangement for receiving and/or transmitting signals.

Such mobile device may be, for instance, a mobile station, a mobile subscriber unit, a pager, a cellular telephone, a Personal Digital Assistant (PDA), a portable computer, or any other type of user equipment (UE) capable of operating in a wireless environment.

A third aspect of the present invention relates to a method of controlling a multiple subscriber identity arrangement having a modem and a control unit associated with said modem wherein the modem is capable of receiving messages related to at least two subscriber identities, but not simultaneously, and comprises a listening block capable of monitoring at least one signalling channel associated with the second subscriber identity, the method comprising the control unit interrupting ongoing communication activity on the first subscriber identity during at least one signalling occasion associated with the second subscriber identity and causing the listening block of the modem to monitor the signalling channel associated to the second subscriber identity during said occasion.

A fourth aspect of the present invention relates to a computer program product comprising a computer readable medium, having thereon one or more stored sequences of instructions being loadable into a processor and adapted to cause, when executed by the processor, execution of the steps of the method.

It should be noted that embodiments of the invention are equally applicable to dual SIM devices and multiple SIM devices with three or even more subscriber identities.

Also, even though the subscriber identities typically reside in local memory areas of SIM cards which are physically inserted into corresponding SIM card readers in a mobile terminal; this must not be the case in all embodiments. In some embodiments, the subscriber identities may be provided to the mobile terminal in the form of a SIM software application executed in the terminal, and/or as a virtual SIM which is "stolen" or "borrowed" from another device and is rendered accessible to the terminal by way of a (wireless or other) interface.

Furthermore, it should be noted that embodiments of the invention are equally applicable to mobile terminals as to stationary devices associated with a cellular telecommunication network (e.g. routers, power consumption meters, home alarms, etc). Such stationary devices are configured to be connected to a cellular communication network and are, when connected, seen as terminals by the network.

### BRIEF DESCRIPTION OF THE DRAWINGS

The present invention is illustrated by way of example, and not by way of limitation, in the figures of the accompanying drawings, in which like reference numerals refer to similar elements and in which:
- Fig.1 is a schematic block diagram of a mobile device according to some embodiments of the invention;
- Fig.2 is a schematic block diagram of a multi SIM modem according to some embodiments of the invention, that may be comprised in a mobile device;
- Fig.3 is a flow chart showing steps of a method of controlling the radio resources in the multi SIM modem, according to some embodiments of the invention;
- Fig.4 is a chart which shows one example of creating gaps on one SI for performing activities on the other SI in the context of a 2G radio communications system; and,
- Fig.5 is a chart which shows one example of creating gaps on one SI for performing activities on the other SI in the context of a 3G radio communications system.

### DESCRIPTION OF EMBODIMENTS

DSDS mobile phones behaviour is not described in any Standard. For this reason, DSDS mobile phones are typically based on e.g. the 3GPP Standard or any corresponding suitable standard. However, such standards do not describe use cases as the ones disclosed above and hence do not provide any solution to the problem of missed calls related a second SI when the first SI is performing communication (e.g. voice call, signalling or background activities).

For instance 3GPP Technical Specification 25.331, "Radio Resource Control" (RRC), provides that paging of idle mode UE is controlled by the paging and notification control function entity (PNFE), but is absolutely silent as to paging of one SI in a device equipped with a multi SIM when the device is in a dedicated mode on another SI.

In particular, when the multi SIM terminal is in a continuous reception/transmission mode on a first SI, it is not provided with any measurement gaps in which it may be tuned to a second SI to monitor a Paging Channel (PCH) associated with said second SI.

Embodiments of the invention deal with improving the MT call setup rate from the end user point of view, within a mobile device with one single reception/transmission chain being able to operate at a time. In particular, embodiments of the invention deal with the problem of avoiding missed calls in DSDS mobile phones by reading PCH data blocks on one SI while the modem is in a dedicated mode of operation on the other SI, performing e.g. background activity such as email synchronization.

In the framework of the following description of embodiments of the invention, we shall consider situations where the multi SIM modem of a DSDS mobile device is active for communication on one SI and gaps are needed for something to be done on the second SI at a time when there is no transmission/reception gap in the communication on the first SI. Non limiting examples of such situations are as follows:
- the modem is in a continuous reception mode on one SI, meaning that there is no gap available for carrying out activities other than reception of data blocks associated with said SI; or,
- the modem is in a non-continous reception or transmission mode on the first SI, but paging occasions for the second SI collide with the reception/transmission on the first SI (i.e. there may be gaps in the first SI activity but not where the paging occasions for the second SI are).

Other use cases may be addressed by embodiments of the invention when there is a conflict on the radio access, i.e. when the UE would have to send or receive data on one SI and listen to paging or perform measurements (or any other activity that may need to be handled) on the other SI.

When used hereinafter with reference to embodiments in the context of the 3GPP Standard, the terminology "continuous reception" may e.g. refer to periods when the modem is in continuous reception (CRX) mode, e.g. continuously monitoring the High Speed Shared Control Channel (HS-SCCH) of the High-Speed Downlink Packet Access (HSDPA) of the 3GPP Wideband-Code Division Multiple Access (W-CDMA) communication system. This may occur when the discontinuous reception (DRX) is disabled, or when the DRX operation is enabled but the modem is in a receive burst part of the DRX pattern.

In the context of a 2G radio communications system, the terminology "continuous reception mode" may e.g. refer to a packet transfer connection mode of operation, notwithstanding the fact that modulation may be of Time Division Multiple Access (TDMA) type. Stated otherwise, the concept of "continuous reception" is consistent with TDMA schemes as used in 2G systems, the continuous reception state being appreciated on a per channel basis, that is to say for one channel independently of the others. Thus, even if the modem switches over time from one channel to another depending on the time slots concerned, for instance from a downlink channel to an uplink channel and *vice versa,* the UE shall still be considered in a continuous reception mode for the downlink channel itself.

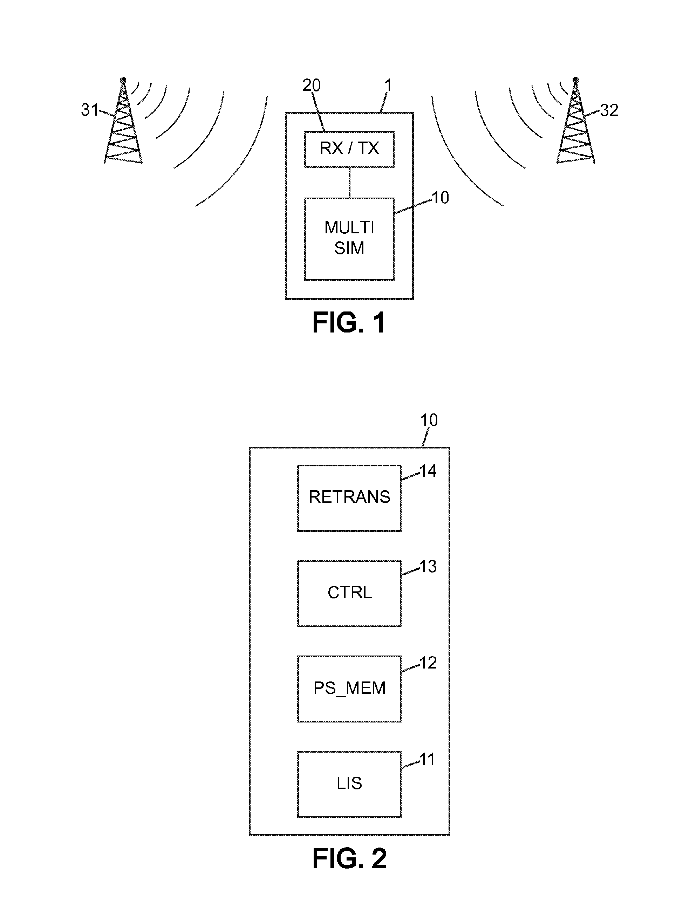

Fig.1 shows a mobile device 1, for example a mobile phone, according to possible embodiments. Mobile device 1 comprises a multi subscriber identity modem 10, for example a Dual SIM Dual Standby (DSDS) modem, and a single reception/transmission block 20 adapted to receive and/or transmit signals in respect of only one subscriber identity at a time. The reception/transmission block 20 may comprise an antenna system, and one or a plurality of radio transmitters (Tx) and one or a plurality of radio receivers (Rx). In case of a plurality of Tx and/or Rx, only one of them is operable at a time. In some embodiments, such limitation may stem from the fact that the Rx/Tx block 20 of the mobile device comprises only one base band (BB) module.

In the following description of embodiments, we shall limit ourselves to consider one example where two subscriber identities are associated with two cellular networks. It is in no way intended to limit the scope of possible embodiments. Indeed, the at least two subscriber identities may be associated with the same or different cellular networks, and may be using the same or different Radio Access Technologies (RAT) as mentioned above. In some cases, each subscriber identity is defined by the content data stored in a Subscriber Identity Module (SIM), but other alternatives exist as also elaborated on above. However, for reasons of conciseness of the following description, a first and a second subscriber identity shall sometimes be referred to by SIM#1 and SIM#2, respectively.

Fig.1 thus illustrates a use case considered here, wherein both a first base station 31 belonging to a first cellular network and a second base station 32 belonging to a second cellular network, are in the direct vicinity of the mobile device 1. Thus, modem 10 is capable of listening to the two cellular networks, selectively through either one of the fixed network equipments 31 or 32, respectively, but not simultaneously. In other words, modem 10 may receive or emit messages managed by the first cellular network, and (but not at the same time) receive or emit messages managed by the second cellular network, via the respective base stations 31 and 32.

Consequently, the mobile device 1 is obliged to slice its radio opening time between the different subscriber identities. Consequently, as soon as a subscriber identity is active in a dedicated mode of operation (e.g. for voice call or for packet transfer), the other subscriber identity becomes out of service with respect to the network.

As part of radio resource management, a mobile user equipment (UE) of a 3GPP radio communications system such as the Universal Mobile Telecommunications Standard (UMTS), may be used in either one of at least two dedicated modes of operation (see for example, 3GPP Technical Specification 25.331, "Radio Resource Control" (RRC)).

In a first dedicated mode of operation, a shared channel, specifically the Forward Access Channel (FACH), is shared between a group of UEs having no associated dedicated physical control channel. The FACH is used for transmitting low volume data. It may typically be used for the viewing time after a Web page download. Use of the FACH gives improved cell capacity at low data rates.

In the second mode of operation, there is used a Dedicated Channel (DCH) to a mobile user terminal which has a dedicated physical control channel, including transmit power control information and pilot information, continuously transmitted. A DCH of a cell is typically used for high volume data or voice.

In the description of embodiments that follows, we will consider situations where reception activities are performed by the modem on any one of the subscriber identities. As far as a 3GPP mobile device is concerned, this may be in either one of the above dedicated modes of operation. One common characteristic of these two modes of operation, is that they are continuous reception modes. In the context of the present description, a continuous reception mode is a reception mode which does not provide for predefined gaps in the modem activity, which could allow the modem performing some other tasks, like monitoring the Paging Channel on another SI.

However, embodiments may be practiced within the scope of the invention for any communication mode of operation, either in reception or in transmission. For example, some other communication activities may be activities in a dedicated mode of operation for reception (e.g. streaming of audio and/or video) or for transmission (e.g. voice).

Also, embodiments of the invention may relate to user equipments of a 2G radio communications system.

Embodiments of the invention address situations where background activities or foreground activities are being performed by the modem on any one of the subscriber identities. These two kinds of activities are to be understood as follows.

Foreground activities, such as an ongoing voice call, video call, web browsing or receipt of a live audio or video stream, are activities typically induced by the end user. A foreground activity is thus an activity which the user is very likely taking active part in.

On the contrary, background activities occur in the mobile device without any active participation by the user, and usually without the user being even aware of it. Examples of background activities are signalling procedures, like Location Area Update (LAU) and Routing Area Update (RAU). Other examples are applications running in dedicated modes, such as email retrieval, synchronization of email box, calendar and contacts, checking for news flash information, updating current weather forecast and financial data, and software and security updates, etc.

Other definitions of foreground and background activities may be practiced within the scope of embodiments of the invention. For example, some non urgent activities (e.g. streaming of audio and/or video) may be defined as background activities by contrast with other more urgent activities (e.g. telephone calls) which shall then qualify as foreground activities.

For instance, a background activity is an activity the interruption of which will not even be noticed the end user, or will not be considered as a drawback by the user compared with the advantage of not missing incoming calls on another subscriber identity.

Communication activities can generally be sorted into two or more classes, each of which may be given a priority in relation to the other classes. How the invention is practiced can then be based on the classes. For instance, paging messages may belong to a class which causes that it will always be listened to if at all possible, or only if the ongoing communication activity on the first SI is of a certain class. More generally, the line of action if a call setup request is received for the SIM#2 may depend on the class of ongoing activity on SIM#1 and/or on the class of requested activity on SIM#2.

In the example embodiment represented in Fig.2, the modem 10 comprises a listening block 11 for listening to messages, for example paging messages and other signalling messages, from a plurality of subscriber identities.

In this example, the modem 10 further comprises a paging schedule memory 12 configured to have knowledge of a scheduling of the paging occasions for each of the subscriber identities associated with the modem. Such knowledge may encompass the radio parameters associated with the paging channel on SIM#1 and SIM#2, which may be acquired when the modem is in idle mode on both SI, through broadcast system information.

In addition to the modem 10, the arrangement further comprises a control unit 13, which may be internal or external to the modem 10, and which is configured to control the radio opening time for each subscriber identity. E.g. to monitor radio communication downlink physical and/or logical channels related to one subscriber identity at some given times and related to a second subscriber identity at other given times, in a reception mode of operation. In a transmission mode of operation, similarly, the control unit 13 may be configured to cause the encoding, modulation, and transmission of the data to be emitted on an uplink channel, on one of the SI.

Finally, the modem 10 may comprise a data error recovery unit 14, which is configured to handle reception errors in a reception mode of operation of the modem, and transmission errors in a transmission mode of operation of the modem.

In the transmission mode, the data error recovery unit 14 may be adapted to cause transmission of data blocks which have not been sent during the created gap, either systematically on a "as soon as possible" basis, or only upon request from the network. To this end, the unit 14 may comprise a buffer memory in which the not transmitted blocks are temporarily stored. Transmission error recovery may also be achieved by error correcting codes or any other known or future suitable technique.

In the reception mode, the handling of errors may comprise the handling of missing (i.e., not received) or corrupted data blocks.Depending, e.g., on the gap duration, it may be done at the physical layer (Layer 1) and/or at the data link layer (Layer 2) of the Open Systems Interconnect (OSI) model (see Chapter 7 of chapter 7 of the ISO 7498-1 Standard), and/or at the transport layer (Layer 3) of the TCP/IP networking model as defined in RFC 1122 which somehow corresponds to the transport Layer (Layer 4) of the OSI model.

Embodiments of the invention take advantage of the presence of such error recovery unit 14 in readily available modems, to cope with data blocks which become missing due to the creation of gaps in the ongoing transmission or reception activity associated with the first SI.

In embodiments of the invention, indeed, missing data blocks, i.e., data blocks which have not been received/transmitted during the interruption of SIM#1 activity and reading of SIM#2 paging channel, may be handled as incorrectly received or not received data blocks in the normal flow of data blocks. Thus, retransmission of any missing data block may be requested once the SIM#1 activity resumes.

Such retransmission may be triggered by an OSI Layer 1 (OSI L1,) Automatic Retransmission Request (ARQ) scheme, such as HARQ (Hybrid Automatic Repeat reQuest) mechanism readily available in most recent 3GPP mobile devices. HARQ is a mechanism which allows limiting and correcting transmission errors thanks to redundancy in the physical layer and to retransmission in the data link layer. HARQ is used in the High-Speed Downlink Packet Access (HSDPA) of the 3GPP W-CDMA communication system. HSDPA is a transport layer channel, which has been added into the W-CDMA Release 5 Specifications. It is an enhanced third generation (3G) mobile telephony communication protocol in the High-Speed Packet Access (HSPA) family, also dubbed 3.5G, 3G+ or turbo 3G, which allows networks based on Universal Mobile Telecommunication Systems (UMTS) to have higher data transfer speeds and capacity. HARQ is also used in the IEEE 802.16 family of standards, as of the 802.16e-2005 amendment -2005, for mobile broadband wireless access, also known as "mobile WiMAX". It also has been used in the 3GPP Long Term Evolution (LTE).

Additionally or alternately, it may be obtained by the implementation of a OSI Layer 2 (OSI L2) retransmission mechanism such as Radio Link Control (RLC) protocol in acknowledged mode.

Finally, as a variant of or in addition to the above mechanisms, retransmission of missing data blocks may also result from ARQ mechanisms used in TCP/IP networking.

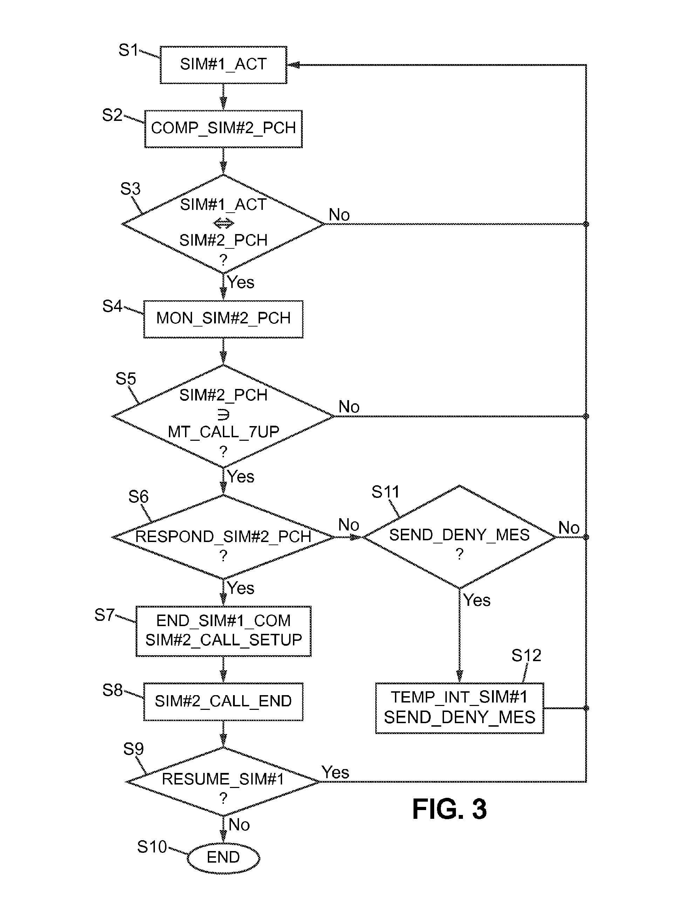

Referring to Fig.3, there will be described steps of a method of controlling a dual subscriber identity modem according to some embodiments, where the modem is originally active for communication activities on SIM#1 and the signalling occasions which are intended to be monitored on SIM#2 are paging occasions.

The one with ordinary skills in the art will identify that the process herein described is also applicable to a modem supporting more than two subscriber identities, for instance :
- when one the modem is active on one SI and several other SI need to listen to their respective paging channels;
- when the modem in active on several SI using respective RF receivers and one further SI needs to listen to its paging channel (e.g. a 3-SIM phone with only 2 Rx.); or,
- when the modem in active on several SI using respective RF receivers and several other SI need to listen to their respective paging channels.

In step S1 of Fig.3, background activities or voice reception/transmission activities are performed on SIM#1, e.g. in a continuous reception (CRX) mode of operation. Examples of such ongoing activities may be the reception of voice data from the network associated with the first subscriber identity, using either one of FACH and DCH. Unlike in the Idle mode, the mobile device is in a connected mode when in the camped on DCH, which implies a continuous reception activity, in the sense as defined above. Monitoring the FACH is not strictly speaking operation in a connected mode under the terminology of the 3GPP Standard but, still, it is a continuous receptionactivity. Examples of background activities include, i.a., signalling procedures like LAU and RAU, and applications running in dedicated modes, such as email retrieval, synchronization of email box, calendar and contacts, checking for news flash information, updating current weather forecast and financial data, and software and security updates, etc.

In step S2, whose execution may be parallel to or in sequence with the execution of the SIM#1 communication activity of step S1, the control unit retrieves and/or computes timing positions of the Paging Channel (PCH) or other signalling channel of SIM#2. This step may be performed based on the knowledge of the PCH timing positions for at least SIM#2 and preferably for every SI supported by the mobile device, which is e.g. provided by the paging schedule memory 12 of the modem 10. More generally, step S2 comprise the determination of signalling occasions associated with the second subscriber identity SIM#2.

In step S3, it is determined (e.g. by the control unit 13 of the modem 10) whether there is a conflict between, e.g. a paging occasion associated with the second subscriber identity SIM#2, namely a time slot of the PCH of SIM#2, and the activity in the reception or transmission mode of SIM#1. If there is no conflict, namely in the absence of such SIM#2 paging occasions, then the reception or transmission of data on SIM#1 is continued. In other words, the algorithm loops to step S1 to continue execution of ongoing communication activities on SIM#1.

If, on the contrary, it is determined at step S3 that there is a conflict, then the algorithm jumps to step S4. For instance, it may be considered that there is a conflict if at least one SIM#2 PCH data block conflicts with the ongoing activity on SIM#1, and thus cannot be read. Another definition of a conflict can be that any of the SIM#2 PCH data blocks can be read. Still another definition of a conflict may be that the number of SIM#2 PCH data blocks which can be read is below a given threshold.

At step S4, that is to say when there is a conflict between the reception or transmission activity on SIM#1 and a PCH occasion on SIM#2, the modem 10 is controlled by the control unit 13 to hold, that is to say temporarily stop, the modem activity on SIM#1 at SIM#2 paging channel timing positions, and to temporarily switch to SIM#2 to monitor the paging channel of SIM#2 during at least one time slot, so as to read a PCH block associated with the second subscriber activity.

At step S5, it is then determined whether a received PCH block contains a request for MT call setup on User Equipment (UE) side.

If yes, step S6 may offer to possibility to determine whether the call is to be responded on SIM#2. If yes, then the process continues with step S7, otherwise it continues with step S11. Step S6 may be carried out according to several alternatives.

Indeed, when there is an incoming call in SIM#2, the control unit may be configured to :
- prompt the user and allow him to decide whether or not to interrupt the communication activities ongoing on SIM#1 to answer the SIM#2 incoming call, e.g. through an appropriate user interface of the mobile phone; or,
- cause an automated selection algorithm (e.g. based on categorising communication types into different priorities) decide whether or not to interrupt the communication activities ongoing SIM#1 to answer the call on SIM#2; or
- combine the two above alternatives (e.g. ask the user for some classes of SIM#1 communication activities and select automatically for other classes).

For example, there might be provided a setting in the phone to let the user decide whether or not, and such being the case for which classes of activities, the packet transfer for the activities on one SI shall be interrupted by any call on the other SI. In a variant, the phone may have it hard coded to always apply one of the above scheme.

If it is decided at step S6 not to respond to the paging request on SIM#2, it may be decided at step S11 whether or not to at least send a deny message to the network associated to SIM#2, so that said network does not have to repeat the paging request over and over again.

If it is decided not to send a page denial message, then the algorithm returns to step S1, otherwise, at step S12, a short interruption of SIM#1 activity may be performed (unless the gap or another available gap can also be utilized for sending the page denial message) and the page denial message sent to the network associated to SIM#2. Then the process returns back to step S1 to resume communication activities on SIM#1.

If, on the contrary, it is decided at step S6 to respond to the paging request on SIM#2, then, at step S7, the communication activities on SIM#1 are ended and a call setup is performed on SIM#2 according to parameters of the second subscriber identity. Then, the algorithm continues with step S8.

At step S8, the communication activities on SIM#2 reach an end when the received call is over.

At step S9, it may be determined whether or not to resume the communication activities on SIM#1. This may be particularly useful for background activities like the downloading of software updates or re-occurring information like weather forecast information. If yes the process returns to step S1, else it ends up at step S10.

It results from implementation of the above method that receipt of an incoming call in respect of the second SI is possible even while the modem is active in a dedicated mode on the first SI, either in reception or in transmission. Indeed, a gap is created in the SIM#1 communication activity that allows PCH reading on SIM#2. In turn, this may end-up with an incoming MT call on SIM#2 being answered at step S7, instead of being missed as would happen under such circumstances in a mobile device which does not implement the invention. Thus, the incoming call reception rate is increased.

In other words, embodiments of this invention will allow improving MT call setup rate on DSDS mobile phones, because incoming calls in respect of the second subscriber identity are not missed for the reason that the multiple subscriber identity modem is in a continuous reception mode in respect of the first subscriber identity.

As a variant or in addition to the monitoring of paging occasions associated with SIM#2, provision may also be made for the performance of measurements during time slots of a dedicated measurement control channel associated with SIM#2. It may be, e.g. idle type measurements performed autonomously by the mobile station on a dedicated measurement control channel associated with one inactive subscriber identity, that is to say on a subscriber identity for which there is no communication activity ongoing (namely SIM#2 in our example).. Such measurements may not be subject to any reporting to the network. For example, they may pertain to neighbor cell activities, both in 2G or 3G. The purpose of these measurements may be to maintain synchronization, maintain information on cell reliability, etc.

Measurements which may thus be covered are, for instance, Quality measurements (e.g. BLER, SIR), UE internal measurement (e.g. UE transmitted power, UTRA carrier RSSI, UE reception-transmission time difference), etc.

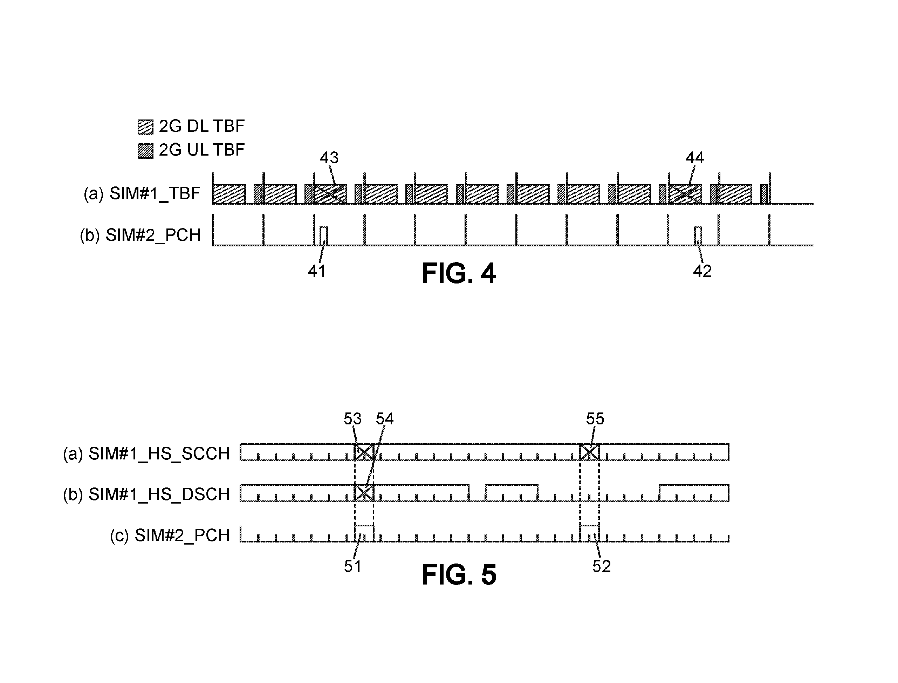

With reference to Fig.4 and Fig.5, there will now be given two examples of the implementation of embodiments of the invention, in the context of a 2G and 3G radio communications system, respectively. These examples are not in any way intended to limit the scope of possible embodiments, and many other use cases may be considered wherein such embodiments will prove advantageous as well.

Fig.4 illustrates an embodiment wherein the modem 10 is in a continuous reception mode on Packet Data Traffic Channel. The Packet Data Traffic Channel (PDTCH) is a channel allocated for data transfer in 2G mobile radio communication systems.

In the context of Fig.4, we assume that the modem is in a PDTCH dedicated mode in respect of the first subscriber identity (SIM#1). In this dedicated mode of operation, it is performing PDTCH monitoring on SIM#1, for instance for mail reading.

In one example, one downlink (DL) Temporary Block Flow (TBF) may be assigned to SIM#1 with four time slots and one uplink (UL) TBF is assigned to SIM#1 with one time slot.

In Fig.4(a), active time windows on SIM#1 are represented with hachure for the DL TBF activities and with dots for the UL TBF activities. PCH activities of SIM#2 and their timing positions are represented in Fig.4(b). Even if activities on SIM#1 do not use all slots of the PDTCH frame so that there are some gaps in between DL and UL TBF, PCH occasions on SIM#2 may appear during DL TBF activity, that is to say during a time when the modem is in a continuous reception mode on SIM#1. In the example shown, PCH blocks 41 and 42 on SIM#2 occur during DL TBF 43 and DL TBF 44 on SIM#1, respectively.

Therefore, according to embodiments of the invention, the modem is controlled to switch from SIM#1 to SIM#2 during the time normally allocated to DL TBF 43 and DL TBF 44, whereby missing the data blocks contained therein. In Fig.4(a), the "stolen" DL TBF are cross marked to illustrate that they are skipped, i.e., not received, and that respective gaps are created instead, in which gaps the PCH blocks 41 and 42 on SIM#2, respectively, may be received.

If either one of these PCH blocks 41 and 42 contains a request for MT call setup on User equipment (UE) side, then the modem may be controlled to stop activities on SIM#1 and to answer to SIM#2 paging.

The consequence of 2G block stealing is a decrease of packet throughput only, but has no functional impact on the 2G packet transfer on SIM#1: thanks to the packet based approach, and to existing acknowledgment mechanism, network-mobile interaction is robust enough to allow that skipping. Actually, it is equivalent to a bad block decoding, and missed data will be resent by the network. In addition, decrease of packet throughput is very acceptable, in particular for a background service for which throughput is not a key element.

Let us now turn to the example illustrated by Fig.5, which illustrates another example of application for use with the High-Speed Downlink Packet Access (HSDPA) of the third generation partnership project (3GPP) Wideband-Code Division Multiple Access (W-CDMA) communication system. HSDPA is a transport layer channel, which has been added into the W-CDMA Release 5 Specifications. It is an enhanced third generation (3G) mobile telephony communication protocol in the High-Speed Packet Access (HSPA) family, also dubbed 3.5G, 3G+ or turbo 3G, which allows networks based on Universal Mobile Telecommunication Systems (UMTS) to have higher data transfer speeds and capacity. In this application, it is made use of a gap between two HSDPA blocks.

In the context of Fig.5, we assume that the modem is active for continuously receiving HSPDA data blocks in respect of the first subscriber identity SIM#1. Fig.5(a) shows the High Speed Shared Control Channel (HS-SCCH) and Fig.5(b) shows the High-Speed Downlink Shared Channel (HS-DSCH) of the HSPDA channel, related to ongoing continuous reception activities associated with the first subscriber identity (referred to as "SIM#1 activities" in the Figure). Fig.5(c) shows data blocks of the paging channel of the network associated with the second subscriber identity (referred to as "SIM#2 PCH" in the Figure).

The first PCH block 51 appearing in Fig.5(c) conflicts with reception of a HSPDA blocks on the downlink HS-SCCH depicted in Fig.5(a) and on the downlink HS-DSCH depicted in Fig.5(b).

According to embodiments of the invention, it is performed some interruption of downlink HS-SCCH and of the downlink HS-DSCH, to create therein gaps 53 and 54, respectively, in order to be able to monitor the PCH block 51 of SIM#2. If SIM#1 is in dedicated mode, DSDS mobile phone stops reception during all the time needed to read paging on SIM#2.

Similarly, the second PCH block 52 appearing in Fig.5(c) conflicts with reception of a HSPDA blocks on the downlink HS-SCCH depicted in Fig.5(a). Therefore, SIM#1 activity is temporarily stopped to create a gap 55 in which the modem switches to SIM#2 in order to read PCH block 52.

Each time the UE resumes reception on SIM#1 after interruption corresponding to a created gap for performing SIM#2 activities, some data retransmission may be necessary to receive the SIM#1 data blocks which have been missed during the created gap, but such procedure is already available in 3GPP, since missed reception may be considered as reception with decoding errors.

The present invention can also be embedded in a computer program product, which comprises all the features enabling the implementation of the methods described herein, and which - when loaded in an information processing system - is adapted to cause the information processing system to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. A multiple subscriber identity arrangement comprising: a modem (10) and a control unit (13) associated with said modem,
wherein the modem is capable of sending and receiving messages related to at least a first subscriber identity and a second subscriber identity, but not simultaneously, and comprises a listening block (11) capable of monitoring at least one signalling channel associated with the second subscriber identity; and,
wherein the control unit (13) is configured to interrupt ongoing communication activity on the first subscriber identity during at least one signalling occasion (41,42,51,52) associated with the second subscriber identity and cause the listening block of the modem to monitor the signalling channel associated with the second subscriber identity during said occasion.

2. The multiple subscriber identity arrangement of claim 1, wherein the communication activity on the first subscriber identity comprises continuous reception activity associated with said first subscriber identity.

3. The multiple subscriber identity arrangement of claim 2, wherein the continuous reception activity associated with the first subscriber identity comprises at least one of:
- continuously monitoring the Packet Data Traffic Channel, PDTCH, allocated for data transfer in second Generation, 2G, mobile radio communication systems;
- continuously monitoring the Forward Access Channel, FACH, or the Dedicated Channel, DCH, of third Generation, 3G, mobile radio communication systems; and,
- continuously monitoring the High Speed Shared Control Channel, HS-SCCH, of the High-Speed Downlink Packet Access, HSDPA, of the 3GPP Wideband-Code Division Multiple Access, W-CDMA, communication system.

4. The multiple subscriber identity arrangement of either one of claims 1 to 3, wherein the signalling channel associated with the second subscriber identity is a paging channel associated with the second subscriber identity, and wherein the control unit is configured to cause (S1) the modem to interrupt the communication activity associated with the first subscriber identity during paging occasions (41,42,51,52) associated with the second subscriber identity and cause the listening block to monitor the paging channel associated with the second subscriber identity during said paging occasions (41,42,51,52) associated with the second subscriber identity.

5. The multiple subscriber identity arrangement of either one of claims 1 to 3, wherein the signalling channel associated with the second subscriber identity is a dedicated measurement control channel, and wherein the control unit is configured to cause (S1) the modem to interrupt the communication activity associated with the first subscriber identity during occasions of said dedicated measurement control channel associated with the second subscriber identity and cause the listening block to monitor said dedicated measurement control channel associated with the second subscriber identity during said occasions of said dedicated measurement control channel associated with the second subscriber identity.

6. The multiple subscriber identity arrangement of either one of claims 1 to 5, further comprising a signalling schedule memory (12) configured to have knowledge of a scheduling of signalling occasions for at least the second subscriber identity associated with the modem.

7. A communication device associated with at least the first and second subscriber identities and comprising a multiple subscriber identity arrangement according to either one of the preceding claims, and a reception/transmission block (20) coupled to the modem (10) of the multiple subscriber identity arrangement for receiving and/or transmitting signals.

8. A method of controlling a multiple subscriber identity arrangement having a modem (10) and a control unit (13) associated with said modem wherein the modem is capable of receiving messages related to at least two subscriber identities, but not simultaneously, and comprises a listening block (11) capable of monitoring at least one signalling channel associated with the second subscriber identity, the method comprising the control unit (13) interrupting ongoing communication activity on the first subscriber identity during at least one signalling occasion (41,42,51,52) associated with the second subscriber identity and causing the listening block of the modem to monitor the signalling channel associated to the second subscriber identity during said occasion.

9. The method of controlling of claim 8, wherein the communication activity on the first subscriber identity comprises continuous reception activity associated with said first subscriber identity.

10. The method of controlling of claim 9, wherein the continuous reception activity associated with the first subscriber identity comprises at least one of:
- continuously monitoring the Packet Data Traffic Channel, PDTCH, allocated for data transfer in second Generation, 2G, mobile radio communication systems;
- continuously monitoring the Forward Access Channel, FACH, or the Dedicated Channel, DCH, of third Generation, 3G, mobile radio communication systems; and,
- continuously monitoring the High Speed Shared Control Channel, HS-SCCH, of the High-Speed Downlink Packet Access, HSDPA, of the 3GPP Wideband-Code Division Multiple Access, W-CDMA, communication system.

11. The method of controlling of either one of claims 8 to 10, wherein the signalling channel associated with the second subscriber identity is a paging channel associated with the second subscriber identity, and wherein the control unit causes (S1) the modem to interrupt the communication activity associated with the first subscriber identity during paging occasions (41,42,51,52) associated with the second subscriber identity, and causes the listening block to monitor the paging channel associated with the second subscriber identity during said paging occasions (41,42,51,52) associated with the second subscriber identity.

12. The method of controlling of either one of claims 8 to 10, wherein the signalling channel associated with the second subscriber identity is a dedicated measurement control channel, and wherein the control unit causes (S1) the modem to interrupt the communication activity associated with the first subscriber identity during occasions of said dedicated measurement control channel associated with the second subscriber identity, and causes the listening block to monitor said dedicated measurement control channel associated with the second subscriber identity during said occasions of said dedicated measurement control channel associated with the second subscriber identity.

13. A computer program product comprising a computer readable medium, having thereon one or more stored sequences of instructions being loadable into a processor and adapted to cause, when executed by the processor, execution of the steps of any one of Claims 8 to 12.
